# EUROPEAN PATENT APPLICATION

(11) **EP 1 279 533 A1**
(43) Date of publication of application: **29.01.2003**
(21) Application number: 02016520.5
(22) Date of filing: 23.07.2002
(51) Int. Cl.: B60H 1/34, B60H 1/24

(54) **Structure, in particular a transpirating dashboard, for diffusion of air in a passenger space of a motor vehicle**

(30) Priority: 24.07.2001 IT TO20010733
(71) Applicant: FIAT AUTO S.p.A., 10135 Torino (IT)
(72) Inventor: Rotondo, Nicola, 10149 Torino (IT)
(74) Representative: Franzolin, Luigi

(57) **Abstract**

A structure (1), in particular a transpirating dashboard, for diffusion of air in a passenger space (2) of a motor vehicle (3), has a support portion (10), which is connected to an attachment portion of the motor vehicle (3), and delimits at least partially a receptacle (20, 41); the structure (1) also has a door (23, 43), which is mobile in relation to the support portion (10), in order to open and close the receptacle (20, 41); the door (23, 43) is provided with an outer panel (28, 48) which is permeable to air, and has a hollow space (30, 50), which (30, 50) communicates with an air distribution system (7), in order to diffuse the air itself in the passenger space (2), through the outer panel (28, 48), at least when the receptacle (20, 41) is closed.

## Description

The present invention relates to a structure for diffusion of air in a passenger space of a motor vehicle, and, in particular, to a dashboard of the transpirating type, to which the following description refers explicitly, without however detracting from generality.

It is known to aerate the passenger space of a motor vehicle by means of a dashboard of the transpirating type, i.e. by means of a dashboard which, in addition to the normal aeration openings, also comprises a fixed wall with a relatively large size, which delimits the passenger space and is permeable, in order to diffuse in a uniform manner the air obtained from a ventilation and/or conditioning unit of the motor vehicle itself.

By this means, in comparison with the known solutions, which are provided only with the aeration openings, it is possible to avoid concentrated jets of conditioned air, which are relatively detrimental to health, a very high level of comfort is obtained in the passenger space, and, simultaneously, the required ambient conditions are achieved in relatively short times, since the diffusion, and thus the re-circulation of air in the passenger space, are extremely efficient.

In motor vehicles, there is a need to produce dashboards comprising spacious receptacles, in particular object-holder apertures, which are closed by mobile doors, which have the disadvantage that they limit the area of the said permeable fixed wall, and thus the surface of the areas through which the air is diffused, consequently reducing the extent of the above-described benefits.

The object of the present invention is to provide a structure, in particular a transpirating dashboard, for diffusion of air in a passenger space of a motor vehicle, which makes it possible to solve the above-described problem simply and economically.

According to the present invention, a structure is provided, in particular a transpirating dashboard, for diffusion of air in a passenger space of a motor vehicle, comprising means for distribution of the air itself; the structure comprising a support portion, which can be connected to an attachment portion of the said motor vehicle, and delimiting at least partially at least one receptacle; and a door, which is mobile between a position of opening, in which it leaves the said receptacle open towards the said passenger space, and a position of closure, in which it is connected to the said support portion, in order to close the receptacle itself; characterised in that the said door comprises an outer panel, which, in use, faces the said passenger space and is permeable to air, and in that it comprises means for communication, for the passage of air from the said means for distribution into the said passenger space, through the said outer panel, at least when the said door is disposed in the said position of closure.

The invention will now be described with reference to the attached drawings, which illustrate a non-limiting embodiment of it, in which:
Figure 1 illustrates partially and in longitudinal cross-section a preferred embodiment of a structure, in particular of a transpirating dashboard, for the diffusion of air in a passenger space of a motor vehicle, produced according to the present invention;
Figure 2 illustrates on an enlarged scale the structure in figure 1, according to a longitudinal cross-section along a plane which is parallel to the cross-sectional plane of figure 1 itself; and
Figure 3 is a partial, schematic cross-section on an enlarged scale, according to line III-III in figure 1.

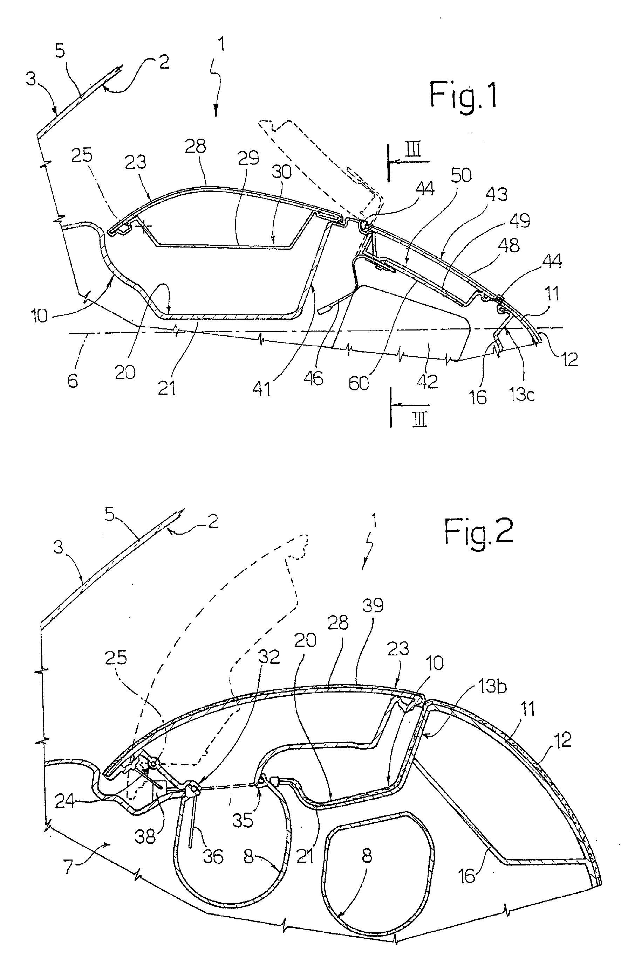

In figure 1, 1 indicates a structure for diffusion of air in a passenger space 2 of a motor vehicle 3 (partially illustrated) and, in particular, a dashboard of the transpirating type, which is disposed in a position facing a windscreen 5 of the motor vehicle 3, in order to delimit a front area of the passenger space 2 itself.

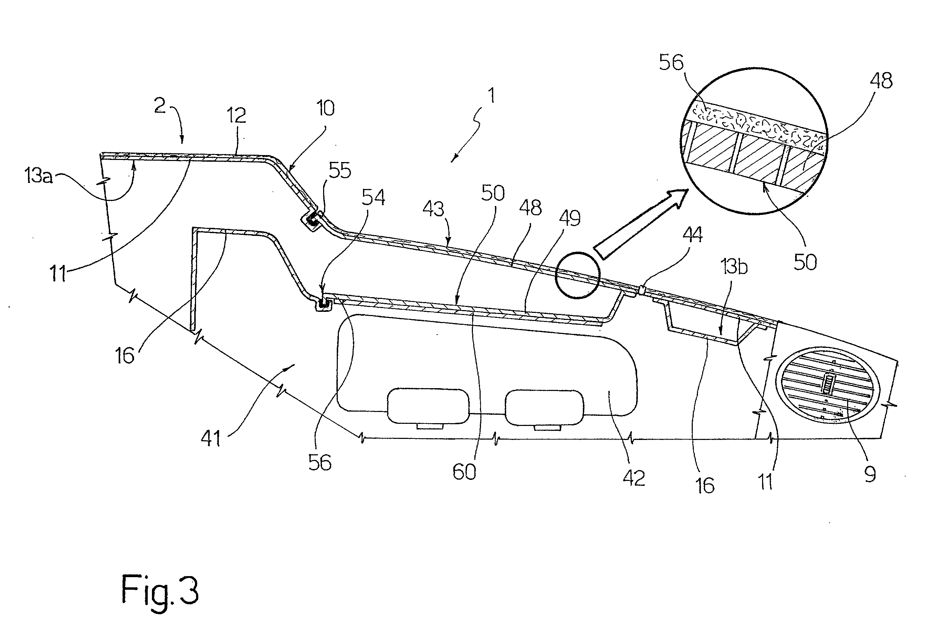

With reference to the attached figures, the motor vehicle 3 has its own longitudinal direction 6, and comprises a unit for ventilation and conditioning of the air (not illustrated) and a system 7 for distribution of the air (partially illustrated in figure 2), comprising a plurality of channels 8 which convey the air from the unit for ventilation and conditioning, towards a plurality of aeration openings 9, only one of which is partially illustrated in figure 3.

The openings 9 are supported by the dashboard 1, which comprises a portion 10 which is integral, in a manner which is known and not illustrated, with an attachment portion (not illustrated) of the motor vehicle 3.

The portion 10 comprises an outer wall 11, which is made of plastics material, is perforated in order to permit passage of air, and is covered, towards the passenger space 2, by a layer 12 of material which is permeable to air, and preferably fabric.

The portion 10 has a plurality of chambers or cavities, each of which communicates in a manner which is known and not illustrated with the system 7, and is delimited by the wall 11 and by a corresponding facing inner wall 16, which is integral, in a manner sealed against fluid, with the wall 11 itself. In particular, the attached figures illustrate at least partially a chamber 13a (figure 3) which is provided in a central position between the passenger side and the driver's side of the motor vehicle 3, and a lateral chamber 13b (figures 2 and 3) which is provided in the area of the passenger side, in the vicinity of a lateral opening 9, and communicates with the chamber 13a via an intermediate chamber 13c (figure 1).

With reference to figures 1 and 2, the dashboard 1 has an object-holder aperture 20, which is delimited by a lateral wall 21, which is integral with the wall 11, and comprises a door 23, which is connected to the portion 10 by means of a hinge 24 (partially illustrated in figure 2), which, in particular, also connects the portion 10 to the said attachment portion of the motor vehicle 3. The hinge 24 allows the door 23 to rotate around an axis 25, which is at right angles to the longitudinal direction 6, between a position of opening (illustrated by a continuous line), in which it leaves the object-holder aperture 20 accessible from the passenger space 2, and a position of closure (illustrated by a broken line in figure 2), in which it closes the object-holder aperture 20.

As illustrated in figure 2, the door 23 comprises an outer panel 28 and an inner panel 29, which face one another, are connected integrally in a manner sealed against fluid, and delimit between one another a hollow space 30, which has an intake 32, which is provided in the panel 29 and communicates directly and in a manner sealed against fluid with an outlet 35 provided in a channel 8, when the door 23 is disposed in its position of closure.

When, on the other hand, the door 23 is disposed in its position of opening, a bulkhead 36 closes the outlet 35, in order to prevent air from emerging from the system 7, into the object-holder aperture 20. In particular, the bulkhead 36 is hinged on the portion 10, and is activated by the door 23, by means of interposition of a lever mechanism 38 (illustrated schematically) in order to open and close the outlet 35 respectively after closure and opening of the door 23 itself.

The panel 28 of the door 23 is made of plastics material, it is perforated in order to permit the passage of air, and, towards the passenger space 2, it is covered with a layer 39, which is similar to the layer 12, in order to diffuse the air from the system 7 to the passenger space 2 in a uniform manner.

With reference to figures 1 and 3, the portion 10 delimits partially a seat 41 which accommodates an airbag 42 (illustrated schematically) and supports a door 43, which is connected to the portion 10 itself by means of interposition of a plurality of safety retention devices 44 which can be released (illustrated schematically), which are disposed on three sides of the periphery of the door 43, and are of a known type, for example of the type comprising a wedge-shaped body, which is mobile against the thrust of a corresponding pre-loaded spring.

As illustrated in figure 1, after the airbag 42 has exploded, the door 43 is mobile from a position of closure (illustrated by a continuous line), in which it is kept connected to the portion 10 by the devices 44, and closes the seat 41 towards the passenger space 2, towards a position of opening (illustrated by a broken line), in which it permits expansion of the airbag 42 from the seat 42 in the passenger space 2, whereas it is kept connected to the portion 10 by means of a plurality of belts 46.

With reference to figure 3, the door 43 comprises an outer panel 48 and an inner panel 49, which face one another and are connected integrally to one another in a manner sealed against fluid, and delimit a hollow space 50 between one another.

When the door 43 is disposed in its position of closure, the hollow space 50 communicates directly and permanently with the chamber 13a, via an intake 54 which is defined by two edges 55, 56 respectively of the panels 48 and 49, which are snapped respectively onto the walls 11 and 16, in a manner sealed against fluid, and such that they can be released, and constitute the extension of the walls 11, 16 themselves.

The panel 48 is made of plastics material, it is perforated in order to permit the passage of air, and is covered, towards the passenger space 2, by a layer 59 which is similar to the layer 12, in order to diffuse the air from the system 7 to the passenger space 2 in a uniform manner, whereas the panel 49 is preferably made of plastics material, and is strengthened by a metal portion 60, in order to withstand the stresses of the explosion of the airbag 42.

It is apparent from the foregoing that, in use, the air conveyed from the system 7 is diffused in a uniform manner in the passenger space 2, not only through the wall 11, but also through the panels 28, 48 of the mobile doors 23, 43, reaching the hollow spaces 30, 50 respectively via the outlet 35 and the chamber 13a.

Thus, compared with the known solutions which have no doors 23, 43 of a transpirating type, the area through which the air is diffused into the passenger space 2 is considerably greater, such that the benefits of ambient comfort in the passenger space 2 itself, provided by the structure or dashboard 1, are particularly substantial.

In addition, the dashboard 1 has design characteristics such as to make it extremely simple to produce and fit on the motor vehicle 3.

Finally, it is apparent from the foregoing description that modifications and variations which do not depart from the field of protection of the present invention can be made to the structure 1 described.

In particular, the layers 12, 39, 59 could be absent or could be made of a permeable material which is different from that indicated, and/or the form and dimensions of the doors 23, 43, and, in general of the dashboard or structure 1, could be different from those illustrated.

In addition, between the panels 28, 48 and system 7, there can be provided communication passages which are different from those described by way of example, for example a body with bellows could be interposed between the outlet 35 and the intake 32.

In addition, the door 48 could close a seat provided in a position different from that illustrated, for example for a lateral protective airbag, or for an airbag to protect the knees, both for the passengers and the driver.

Finally, the fact of producing mobile doors 23, 43 of a transpirating type could be applied to a structure different from the dashboard 1 described, for example to structures disposed along part of the sides of the motor vehicle 3, again in order to aerate the passenger space 2 in a uniformly diffused manner.

## Claims

1. Structure (1), in particular a transpirating dashboard, for diffusion of air in a passenger space (2) of a motor vehicle (3), comprising means (7) for distribution of the air itself; the structure comprising a support portion (10) which can be connected to an attachment portion of the said motor vehicle (3), and delimiting at least partially at least one receptacle (20, 41); and a door (23, 43) which is mobile between a position of opening, in which it leaves the said receptacle (20, 41) open towards the said passenger space (2), and a position of closure, in which it is connected to the said support portion (10) in order to close the receptacle (20, 41) itself; **characterised in that** the said door (23, 43) comprises an outer panel (28, 48) which, in use, faces the said passenger space (2), and is permeable to air, and **in that** it comprises means (30, 32, 50, 54) for communication, for passage of air from the said means (7) for distribution into the said passenger space (2), via the said outer panel (28, 48), at least when the said door (23, 43) is disposed in the said position of closure.

2. Structure according to claim 1, **characterised in that** the said means (30, 32, 50, 54) for communication comprise a hollow space (30, 50), which is delimited by the said outer panel (28, 48), and is isolated from the said receptacle (20, 41), when the said door (23, 43) is disposed in the said position of closure.

3. Structure according to claim 2, **characterised in that** the said door (23, 43) comprises an inner panel (29, 49), which faces, and is connected in a manner sealed against fluid to the said outer panel (28, 48), and **in that** the said hollow space (30, 50) has an intake(32, 54), which communicates with the said means (7) for distribution, at least when the said door (23, 43) is disposed in the said position of closure.

4. Structure according to claim 3, **characterised in that** the said intake (32) is provided in the said inner panel (29), and can communicate directly with an outlet (35) of the said means (7) for distribution.

5. Structure according to claim 3, **characterised in that** the said support portion (10) comprises an outer support wall. (11) which is permeable to air, and an inner support wall (16), which delimit between another at least one chamber 13a, which communicates with the said means (7) for distribution, and **in that** the said intake (54) communicates directly with the said chamber (13a).

6. Structure according to claim 5, **characterised in that** the said outer (48) and inner (49) panels comprise respective end portions (55, 56), which delimit the said intake (54), constituting an extension respectively of the said outer (11) and inner (16) walls, and connected in a manner sealed against fluid respectively to the said outer (11) and inner (16) walls.

7. Structure according to any one of claims 3 to 6, **characterised in that** it comprises means (36) for closure, which are interposed between the said intake (32) and the said means (7) for distribution, and are mobile selectively between a first position, in which they leave free the passage of air towards the said hollow space (30), when the said door (23) is disposed in the said position of closure, and a second position, in which they prevent passage of the air from the said means (7) for distribution in the said receptacle (20), when the said door (23) is disposed in the said position of opening.

8. Structure according to claim 7, **characterised in that** the said means (36) for closure comprise a bulkhead (36); means (38) for transmission being interposed between the said door (23) and the said bulkhead (36), in order to displace the bulkhead (36) itself between the said first and second position, further to the displacement of the said door (23).

9. Structure according to any one of claims 3 to 8, **characterised in that** the said inner panel (49) is made at least partially of plastics material, and supports at least one strengthening element (60).

10. Structure according to any one of the preceding claims, **characterised in that**, in use, the said receptacle (41) accommodates an airbag (42).

11. Structure according to any one of claims 1 to 9, **characterised in that**, in use, the said receptacle defines an object-holder aperture (20).
